# EUROPEAN PATENT APPLICATION

(11) **EP 0 710 903 A1**
(43) Date of publication of application: **08.05.1996**
(21) Application number: 95916037.5
(22) Date of filing: 21.04.1995
(51) Int. Cl.: G05B 19/05

(54) **SEQUENCE PROGRAM EDITING SYSTEM**

(30) Priority: 17.05.1994 JP 101473/94; 10.06.1994 JP 128510/94
(71) Applicant: FANUC LTD., Minamitsuru-gun, Yamanashi 401-05 (JP)
(72) Inventor: ONISHI, Yasushi, Fanuc Mansion Harimomi 8-304, Minamitsuru-gun, Yamanashi 401-05 (JP); SAIKI, Yoshiharu, Fanuc Mansion Harimomi 12-502, Minamitsuru-gun, Yamanashi 401-05 (JP)
(74) Representative: Brunner, Michael John
(86) International application number: JP9500798
(87) International publication number: WO9531758

(57) **Abstract**

A system for editing a sequence control program is disclosed, which simplifies the operations required to edit subprograms. A main program and several subprograms, to each of which an identifier is affixed, are entered via a keyboard (1), and then stored in a memory (2) which serves as program storage means. When a command is entered via the keyboard (1) to display the identifiers, identifier reading means (3) selectively reads the identifiers from the memory (2), and display control means (5) then lists up the read identifiers on a monitor screen (6). In response to a selection command entered via the keyboard (1) to select one of such identifiers displayed on the screen, program reading means (4) reads out a program having the selected identifier from the memory (2) and displays it on the monitor screen (6) via the display control means (5).

## Description

### Technical Field

The present invention relates to a system for editing a sequence control program to be executed by a programmable controller (PC), and more specifically, to a system for editing a sequence control program which contains a large number of subprograms.

### Background Art

According to a widely expanding use of programmable controllers (PC), the scale of sequence control programs to be executed by a PC has become enormous in recent years. As such, a sequence control program of today is composed of a main program to roughly describe its total process flow and a large number of subprograms to define individual parts of the program in detail, thereby simplifying program development processes and improving efficiency of program execution.

However, when editing such a sequence control program having many subprograms, an operator should first call the main program up on a monitor screen and then select a desired subprogram by moving a cursor or some other operations to display the subprogram. In the conventional systems, it takes much time and steps to reach the subprogram that he/she desires. In particular, the subprograms in a lower layer require a plurality of operation steps for calling them up, and therefore, it is more uncomfortable to the operator.

In addition to the above problem, there is another important aspect regarding the development of sequence control programs. That is, the programs are often developed by a plurality of people who are responsible in different objects. For example, one person writes codes for the main part of a machine control, while another person programs to control peripheral devices. Thus, from the viewpoint of project management, security of the programs is a matter of concern in such a situation that everybody can make access to or edit any program in development. The conventional systems requires a password to be entered before starting the edit operations, however, it means whoever knows the password can read or edit any program.

### Disclosure of the Invention

Taking the above into consideration, an object of the present invention is to provide a system for editing a sequence control program which will allow a user to edit subprograms by simple operations.

Another object of the present invention is to provide a system for editing a sequence control program, whereby viewing or editing of the programs is only allowed for those who are authorized to manage the programs.

To accomplish the above objects, according to the present invention, there is provided a system for editing a sequence control program to be executed by a programmable controller (PC), which comprises: program input means for inputting subprograms as well as affixing identifiers to the respective subprograms; program storage means for storing the subprograms inputted with the identifiers; identifier display commanding means for issuing a command to display the identifiers; identifier reading means for selectively reading the identifiers from said program storage means in response to the command to display the identifiers; display control means for displaying the read identifiers on a monitor screen; identifier selection commanding means for selecting one of the displayed identifiers; and program reading means for reading one of the subprograms which corresponds to the selected identifier from said program storage means and making said display control means display the read subprogram.

After the subprograms having the respective identifiers affixed thereto are entered via the program input means, the program storage means stores the entered subprograms together with the identifiers. In response to a command from the identifier display commanding means requesting a listing of the identifiers, the identifier reading means selectively reads out the identifiers from the program storage means. The display control means displays on a monitor screen the identifiers which is read out by the identifier reading means. When the identifier selection commanding means specifies one of the displayed identifiers, the program reading means reads out one of the subprograms which corresponds to the selected identifier from the program storage means, and then makes the display control means display that subprogram.

There is also provided another system for editing a sequence control program to be executed by a programmable controller, which comprises: program input means for inputting subprograms as well as affixing privilege codes and identifiers to the respective subprograms, wherein the privilege codes show privilege levels for editing operation of the respective subprograms and the identifiers distinguish the subprograms from each other; program storage means for storing the subprograms inputted with the privilege codes and the identifiers; identifier display commanding means for issuing a command to display the identifiers in response to an input of an operator code which shows a privilege level given to an operator to perform the editing operations; identifier reading means for selectively reading out the identifiers from the program storage means in response to the command to display the identifiers; display control means for displaying the read identifiers on a monitor screen as well as distinguishably displaying the identifiers of the subprograms having the privilege codes showing the privilege levels corresponding to the operator code which is previously inputted; identifier selection commanding means for selecting one of the displayed identifiers; and program reading means for reading one of the subprograms which corresponds to the selected identifier from the program storage means, only when the selected identifier is among the identifiers which is distinguishably displayed by the display control means, and making the display control means display the read subprogram.

After the subprograms are entered via the program input means together with the privilege codes showing their privilege levels for editing operations and the identifiers for distinguishing the subprograms from each other, the program storage means stores the subprograms entered with the privilege codes and the identifiers. The identifier display commanding means issues a command to display the identifiers in response to an input of the operator code which shows the privilege level to authorize the operator to perform the editing operations. In response to the command to display the identifiers, the identifier reading means selectively reads the identifiers from the program storage means. The display control means lists up the read identifiers on the monitor screen as well as distinguishably displaying the identifiers of the subprograms having the privilege codes whose privilege levels correspond to the operator code which has been previously entered. The identifier selection commanding means selects one of those identifiers on the monitor screen. The program reading means reads one of the subprograms which corresponds to the selected identifier from the program storage means, and makes the display control means display the read subprogram, only when the selected identifier is among those which have been distinguishably displayed by the display control means.

### Brief Description of the Drawings

FIG. 1 is a conceptual view showing functions of a first embodiment;
FIG. 2 is a hardware block diagram of an automatic programming system in which the present invention is embodied;
FIG. 3 is a diagram showing a part of the contents of a RAM which stores a complete sequence control program.
FIG. 4 is a diagram showing an example of identifier listing screen;
FIG. 5 is a diagram showing an example of program display screen;
FIG. 6 is a flowchart showing the gist of a procedure to be executed by a processor;
FIG. 7 is a conceptual view showing functions of a second embodiment;
FIG. 8 is a diagram showing a part of the contents of a RAM which stores a complete sequence control program;
FIG. 9 is a diagram showing an example of identifier listing screen;
FIG. 10 is a diagram showing an example of program display screen; and
FIG. 11 is a flowchart showing the gist of a procedure to be executed by a processor.

### Best Mode for Carrying Out the Invention

An embodiment of the present invention will be described below with reference to the drawings.

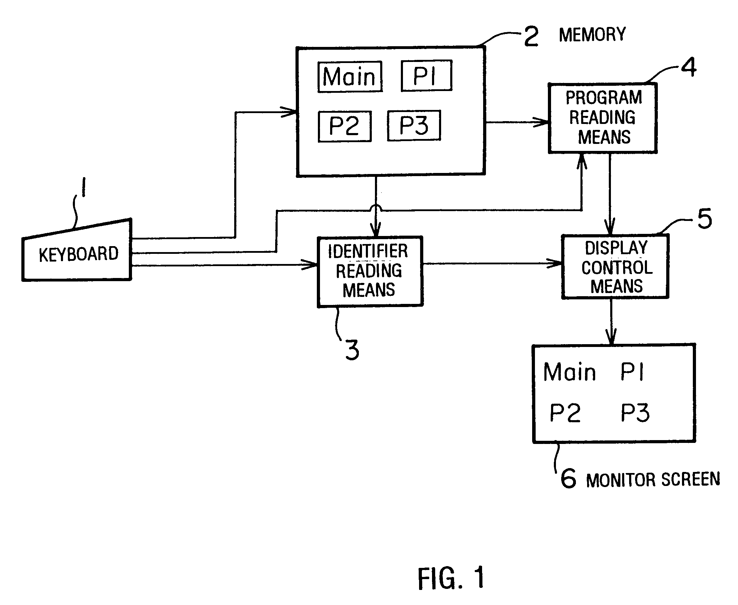

FIG. 1 is a conceptual view showing functions of a first embodiment. A main program and some subprograms, to each of which an identifier is affixed, are entered to the system via a keyboard 1. The entered main programs and subprograms as well as the identifiers affixed thereto will be all stored in a memory 2 which serves as program storage means.

When a command is entered via the keyboard 1 to display the identifiers, identifier reading means 3 selectively reads the identifiers from the memory 2, and display control means 5 then lists up the read identifiers on a monitor screen 6.

In response to a selection command entered via the keyboard 1 to select one of such identifiers displayed on the screen, program reading means 4 reads a program having the selected identifier from the memory 2 and displays that program on the monitor screen 6 with an assistance of the display control means 5.

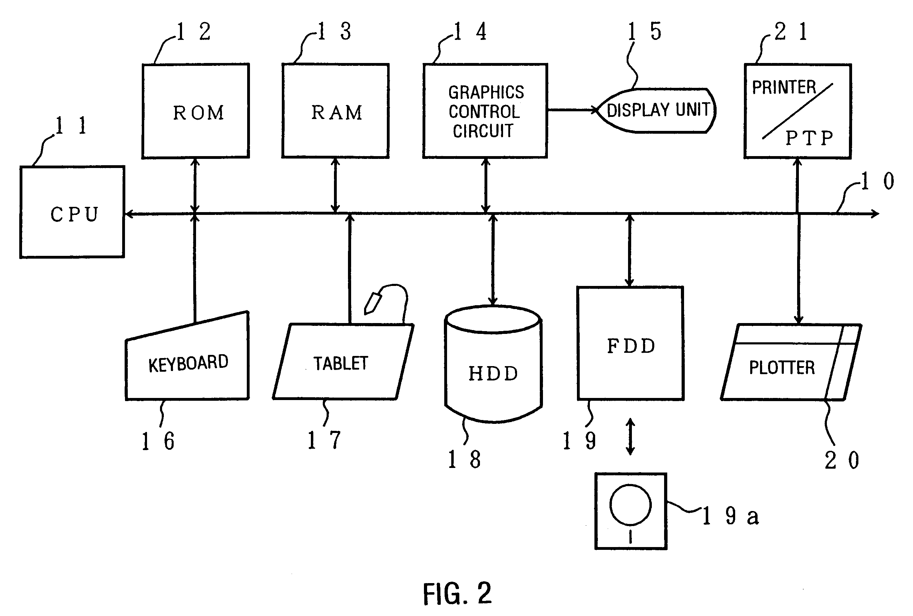

FIG. 2 is a hardware block diagram of an automatic programming system in which the present invention is embodied. A processor (CPU) 11 totally supervises the automatic programming system according to system programs stored in a ROM 12. A RAM 13 stores some data for internal use and a complete sequence control program, for example. The sequence control program is composed of a main program and a plurality of subprograms, to each of which an identifier is affixed.

Provided with display data from the processor 11, graphics control circuit 14 sends the data to a display unit 15 after converting it into a video signal. Upon reception of the video signal, the display unit 15 generates its images on a monitor screen. Display devices such as a cathode ray tube (CRT) and a liquid crystal display are suitable for the display unit 15.

A keyboard 16 is composed of keys for various operations such as entering data and selecting functions. In addition to this keyboard 16, a tablet 17 and a mouse (not shown) are also used to enter data.

A hard disk drive (HDD) 18 stores data which should be retained even after the main power is shut off, e.g., a complete sequence control program. A floppy disk drive (FDD) 19 is a drive for floppy disks 19a, which is used to read and write a sequence control program that has been produced or edited.

In addition to the disk drives, a plotter 20 or a printer/paper tape puncher (PRINTER/PTP) 21 can be used as output devices for the complete sequence control program.

Incidentally, it should be noted that all of the aforementioned constituents are connected to each other by a bus 10.

The following description will devote to a specific procedure in this embodiment of a system for editing a sequence control program.

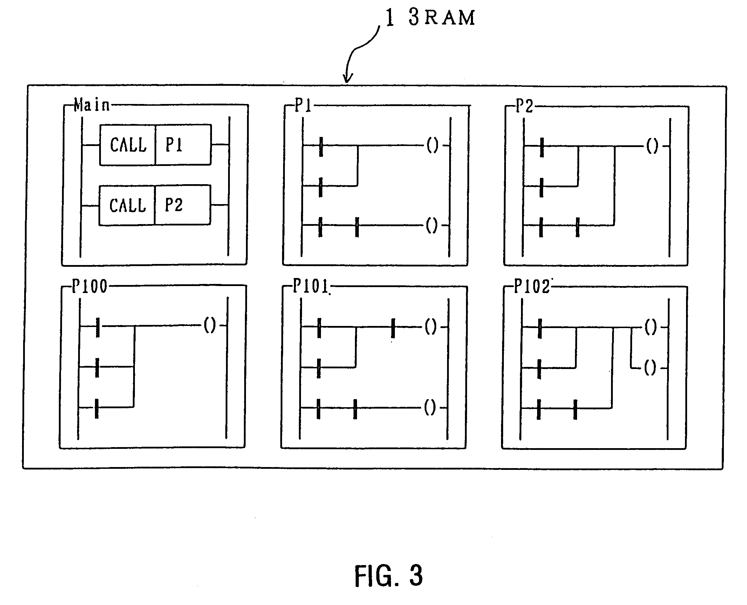

FIG. 3 is a diagram which partially shows the contents of the RAM 13 storing a complete sequence control program to be executed by a programmable controller (PC). The sequence control program is composed of a main program "Main" and several subprograms "P1," "P2," "P100," "P101," "P102," and so on, where those titles of the programs are referred to as the identifiers. The RAM 13 stores the main program and subprograms having the respective identifiers affixed thereto.

When starting to edit the stored sequence control program, an operator hits the keyboard 16 to issue a command to call up an identifier listing screen.

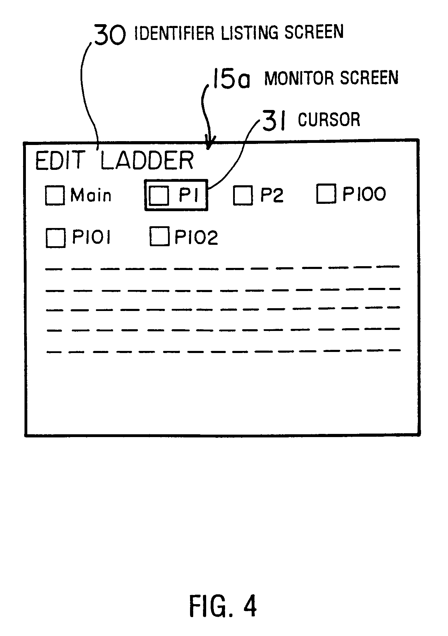

FIG. 4 presents an example of such an identifier listing screen. This example drawing shows that an identifier listing screen 30 appears on a monitor screen 15a of the display unit 15. The identifier listing screen 30 lists up all the identifiers contained in the complete sequence control program: Main, P1, P2, P100, P101, P102, and so on. The operator selects one of those identifiers by adjusting a cursor 31 to the identifier of the program which he/she intends to edit, and then pressing a return key of the keyboard 16 to fix the selection.

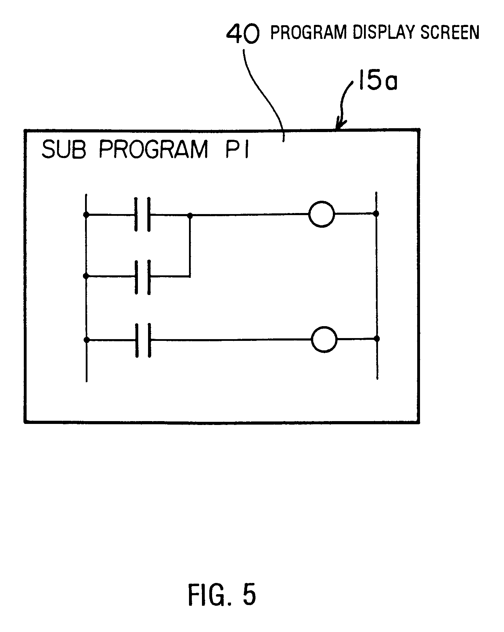

This identifier selection invokes a change of the monitor screen 15a from the identifier listing screen 30 to a program display screen 40 as shown in FIG. 5. The program display screen 40 offers the operator the ladder diagram of the selected subprogram, and he/she is allowed to edit it on this screen.

In case that the operator has to edit other programs consecutively, he/she will recall the identifier listing screen 30 as FIG. 4 and easily select and edit his/her desired program.

As another option for the above situation, it would be possible to make the identifier listing screen 30 pop up in a window overlaid on the program display screen 40.

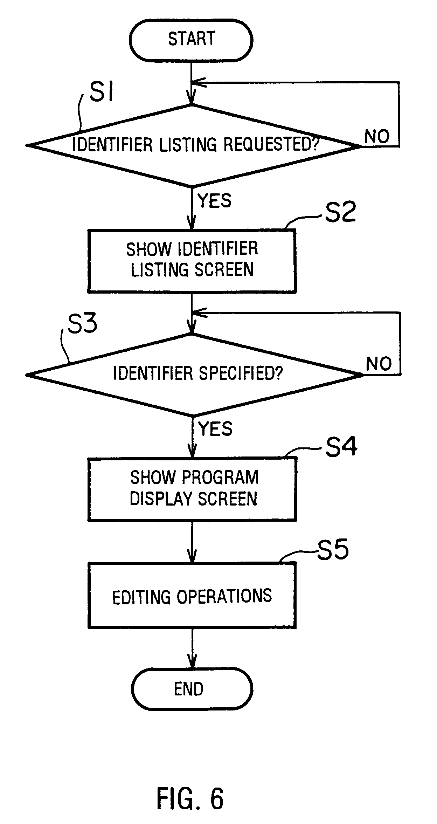

FIG. 6 is a flowchart showing the gist of a procedure to be executed by the processor 11 for the above-described program editing operations. The procedure comprises the following steps.
[S1] It is checked whether the identifier listing is being requested or not. If such a request is found, the procedure advances to the next step S2, and if not, the procedure repeats the current step S1.
[S2] The identifier listing screen 30 appears on the monitor screen 15a.
[S3] It is checked whether any particular program has been specified by selecting its identifier or not. If yes, the procedure advances to the next step S4, and otherwise, the procedure repeats the current step S3.
[S4] The specified program appears on the program display screen 40.
[S5] Further operations are accepted for editing the displayed program.

As discussed so far, in the present embodiment, the identifier listing screen 30 shows the identifiers of the main program and subprograms, allowing the operator to specify one of such programs using the cursor 31. Then the program display screen 40 shows the specified program, on which screen the operator can edit the program. Therefore, the operator easily understands how the sequence control program is organized and can find his/her desired subprogram, which results in increased efficiency of the editing work. In addition, it is easy to consecutively edit the other subprograms.

The present embodiment has shown the automatic programming system as an example of equipment capable of editing a sequence control program, however, it should be noted here that the programmable controller can have such program editing capability as its integral part.

In the above-described first embodiment, the subprograms with respective identifiers are stored, and in response to a display command for the identifier listing, the identifiers will be selectively read out and displayed on the monitor screen. By selecting one of the displayed identifiers, the program having the selected identifier is called up on the monitor screen. This structural arrangement makes it easy for the operator to understand how the sequence control program is totally organized and to search for a specific subprogram, thus improving efficiency of the editing work. In addition, it becomes easy to edit the other subprograms consecutively.

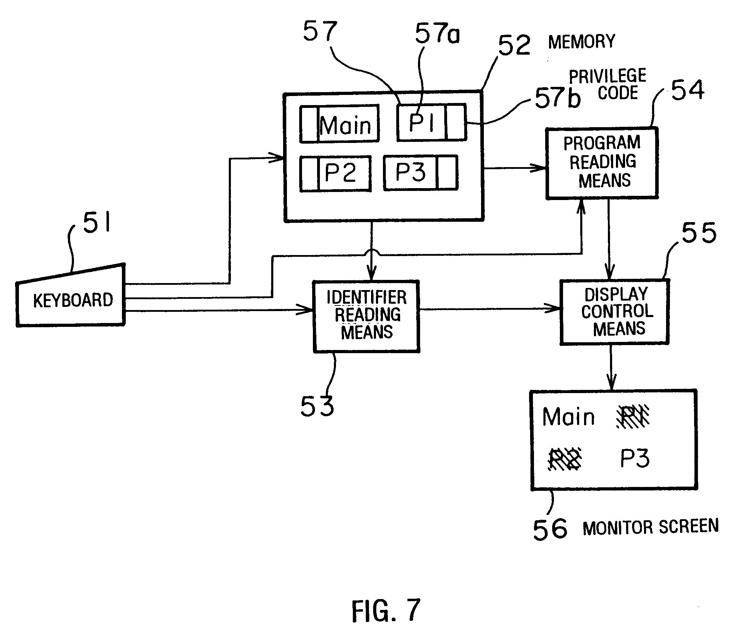

FIG. 7 is a conceptual view which shows functions of a second embodiment of the present invention. In FIG. 7, a keyboard 51 serves as program input means, identifier display commanding means and identifier selection commanding means. A main program and several subprograms are entered through this keyboard 51, while those programs are given respective privilege codes 57b to indicate their privilege levels and identifiers 57a to distinguish between the programs. (Because of the limited space for illustration in FIG. 7, the reference numerals 57, 57a, and 57b are affixed only to the subprogram P1 on behalf of the programs shown there.) All the programs 57 are then stored in a memory 52 together with the respective privilege codes 57b and identifiers 57a.

Through the keyboard 51, an operator enters an operator code which indicates his/her privilege level authorized for editing work, and issues a command to request a listing of the identifiers 57a. In response to this command, identifier reading means 53 selectively reads the identifiers 57a from the memory 52, and display control means 55 then lists up the read identifiers 57a on a monitor screen 56. In this case, the display control means 55 distinguishably displays some of the identifiers 57a of the subprograms whose privilege codes 57b agree with the operator code that is previously entered.

While the relevant identifiers are listed up, the operator can select one of the displayed identifiers 57a through the keyboard 51. A program reading means 54 accepts the selected identifier only when it is among the identifiers 57a distinguishably displayed on the monitor screen 56, and reads out the program having the selected identifier from the memory 52 to display it by the display control means 55.

Note that the hardware of automatic programming system required for this second embodiment is the same as that for the first embodiment shown in FIG. 2.

Next, the following description will devote to a specific procedure to be carried out in the system for editing a sequence control program according to the second embodiment.

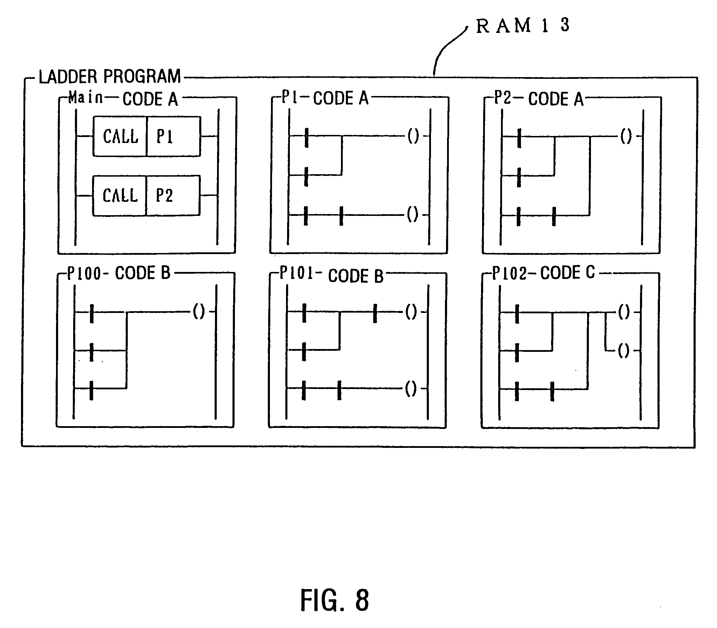

FIG. 8 is a diagram showing a part of the contents of the RAM 13 which stores a complete sequence control program to be executed by a programmable controller (PC). This sequence control program is composed of a main program "Main" and several subprograms "P1," "P2," "P100," "P101," "P102," and so on, and those programs are stored in the RAM 13 together with their own privilege codes and identifiers. In FIG. 8 each program has one of three privilege codes A, B and C. The privilege code A, for example, indicates that the program is for the main part of a machine, and the privilege codes B and C are given to the programs for peripherals in downward order of privilege level.

An operator, who is trying to edit the programs, is only allowed to see and edit the programs having privilege levels equal to or lower than his/her own privilege level. Here, the privilege level of the operator is judged from his/her unique password (i.e., operator code) which he/she enters via the keyboard 16 (see FIG. 2) before starting the operations. After the password is entered, the identifier listing screen appears on the monitor screen of the display unit 15 (see FIG. 2).

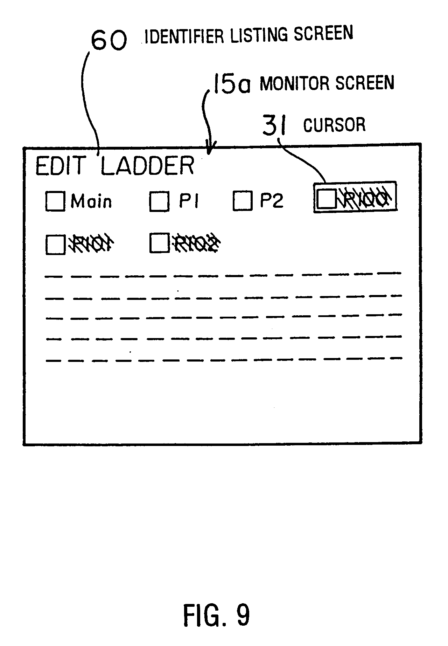

FIG. 9 shows an example of the identifier listing screen. This drawing shows that an identifier listing screen 60 appears on a monitor screen 15a of the display unit 15. The identifier listing screen 60 lists up the identifiers of the sequence control program: Main, P1, P2, P100, P101, P102, and so on. Assuming that the privilege level of the present operator is of the privilege code B, the programs P100 and P101 having the same privilege code B as well as the program P102 having the lower privilege code C are displayed on the identifier listing screen 60 in a different color so as to distinguish them from the other programs. As an alternative method other than the use of different colors, character blinking technique can be used to distinguish the selected programs from the others.

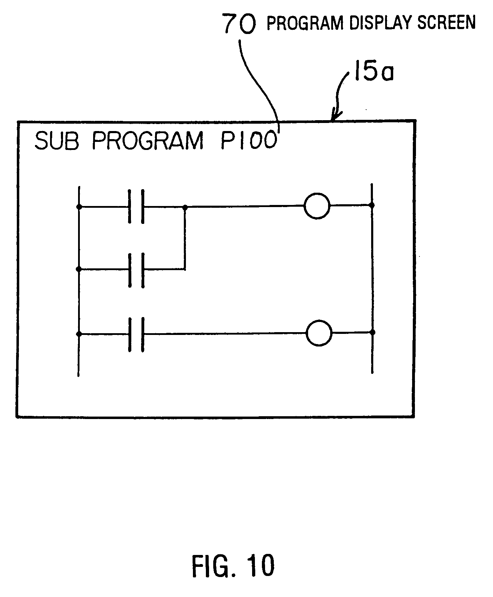

Looking over the identifiers that are distinguishably displayed, the operator adjusts the cursor 31 to the identifier of the program which he/she would like to edit, and then presses a return key of the keyboard 16 to fix the selection. This identifier selection invokes a change of the monitor screen 15a from the identifier listing screen 60 to a program display screen 70 as shown in FIG. 10. However, if the operator happened to select a wrong identifier other than those distinguishably displayed, the monitor screen 15a would not change to the program display screen 70. Otherwise, the operator will see the ladder diagram of the selected subprogram come out on the program display screen 70, where he/she can begin to edit the subprogram.

When it becomes necessary to edit other programs while the program display screen 70 is available, the operator can recall the identifier listing screen 60 as shown in FIG. 9 and easily select and edit the programs which he/she desires.

It should be noted that, as an alternative way for this case, it would be possible to make the identifier listing screen 60 pop up in a window overlaid on the program display screen 70.

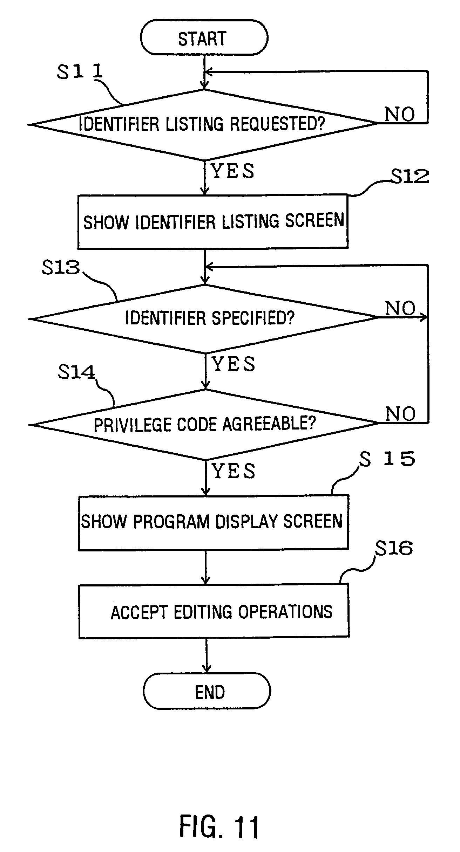

FIG. 11 is a flowchart showing the gist of a procedure to be executed by the processor 11 for the above-described program editing operations. The procedure comprises the following steps.
[S11] After receiving a password, it is checked whether the identifier listing is being requested or not. If such request is found, the procedure advances to the next step S12, and otherwise, the procedure repeats the current step S11.
[S12] The identifier listing screen 60 appears on the monitor screen 15a.
[S13] It is checked whether any particular program has been specified by selecting its identifier or not. If yes, the procedure advances to the next step S14. Otherwise, the procedure repeats the current step S13.
[S14] The privilege code of the selected program is checked and it is decided whether that privilege code is agreeable or not with the privilege level of the password previously entered by the operator. If the privilege code has turned out to be agreeable, the procedure advances to the next step S15. Otherwise, the procedure returns to step S13.
[S15] The selected program appears on the program display screen 70.
[S16] Further operations are accepted for editing the program displayed on the screen.

As discussed so far, according to the present embodiment, the main program and subprograms, to each of which a privilege code is previously affixed, are stored in the RAM 13 and the like. With a command from the operator, the identifiers of the programs are listed up on the identifier listing screen 60 in the way that the operator can distinguish the programs whose privilege codes agree with his/her privilege level. Now, the operator is only allowed to see and edit the programs that are distinguishably displayed on the screen, and thanks to this protection, it is possible to maintain the security of the sequence control program.

The second embodiment has shown the automatic programming system as an example of equipment capable of editing a sequence control program, however, it should be noted here that the programmable controller can have such program editing capability as an integral part of it.

In the above-described second embodiment, each subprogram is stored with its own identifier and its privilege code indicating the privilege level for edit operations. When the operator issues a command to request a listing of the identifiers as well as entering the operator code which authorizes his/her privilege level for edit operations, the system selectively reads out the identifiers and lists up them in such a way that the operator can distinguish the programs having privilege codes relevant to the privilege level implied by the operator code which has been previously entered. The system allows the operator to select any subprogram, however, the selected subprogram will actually appear on the screen only when it is among those listed in the distinguishable way as described above. Thanks to this protection, unauthorized people will never be able to see or edit the contents of the subprograms.

As a result, the security of the sequence control program will be well maintained.

## Claims

1. A system for editing a sequence control program to be executed by a programmable controller, the system comprising:
program input means for inputting subprograms as well as affixing identifiers to the respective subprograms;
program storage means for storing the subprograms inputted with the identifiers;
identifier display commanding means for issuing a command to display the identifiers;
identifier reading means for selectively reading the identifiers from said program storage means in response to the command to display the identifiers;
display control means for displaying the read identifiers on a monitor screen;
identifier selection commanding means for selecting one of the displayed identifiers; and
program reading means for reading one of the subprograms which corresponds to the selected identifier from said program storage means and making said display control means display the read subprogram.

2. A system according to claim 1, wherein said display control means alternately displays the identifiers and the subprograms.

3. A system according to claim 1, wherein said display control means displays the read identifiers in a window screen overlaid on the monitor screen displaying the subprograms.

4. A system according to claim 1, wherein said program input means affixes the identifier to a main program.

5. A system for editing a sequence control program to be executed by a programmable controller, the system comprising:
program input means for inputting subprograms as well as affixing privilege codes and identifiers to the respective subprograms, wherein the privilege codes show privilege levels for editing operation of the respective subprograms and the identifiers distinguish the subprograms from each other;
program storage means for storing the subprograms inputted with the privilege codes and the identifiers;
identifier display commanding means for issuing a command to display the identifiers in response to an input of an operator code which shows a privilege level given to an operator to perform the editing operations;
identifier reading means for selectively reading the identifiers from said program storage means in response to the command to display the identifiers;
display control means for displaying the read identifiers on a monitor screen as well as distinguishably displaying the identifiers of the subprograms having the privilege codes whose privilege levels are relevant to the operator code which is previously inputted;
identifier selection commanding means for selecting one of the displayed identifiers; and
program reading means for reading one of the subprograms which corresponds to the selected identifier from said program storage means, only when the selected identifier is among the identifiers which is distinguishably displayed by said display control means, and making said display control means display the read out subprogram.

6. A system according to claim 5, wherein said display control means alternately displays the identifiers and the subprograms by switching the monitor screen.

7. A system according to claim 5, wherein said display control means displays the read identifiers in a window overlaid on the monitor screen displaying the subprograms.

8. A system according to claim 5, wherein said program input means affixes the privilege code and the identifier to a main program.

9. A system according to claim 5, wherein said display control means uses different colors for distinguishably displaying the identifiers.

10. A system according to claim 5, wherein said display control means distinguishably displays the identifiers of the subprograms having the privilege codes showing the privilege levels which are equal to or lower than the privilege level of the operator code which is previously inputted.

11. A system according to claim 5, wherein said operator code is a password which belongs only to the operator.
